Europäisches Patentamt

European Patent Office

Office européen des brevets

(11) Veröffentlichungsnummer: **0 587 210 A1**

# EUROPÄISCHE PATENTANMELDUNG

(21) Anmeldenummer: **93202339.3**

(51) Int. Cl.5: **H04B 7/04**

(22) Anmeldetag: **09.08.93**

(30) Priorität: **12.08.92 DE 4226676**

(43) Veröffentlichungstag der Anmeldung:
**16.03.94 Patentblatt 94/11**

(84) Benannte Vertragsstaaten:
**CH DE FR GB LI**

(71) Anmelder: **Philips Patentverwaltung GmbH
Wendenstrasse 35c
D-20097 Hamburg(DE)**

(84) **DE**

(71) Anmelder: **PHILIPS ELECTRONICS N.V.
Groenewoudseweg 1
NL-5621 BA Eindhoven(NL)**

(84) **CH FR GB LI**

(72) Erfinder: **Kellermann, Walter, c/o Philips
Patentverwaltung
Wendenstrasse 35c
D-20097 Hamburg(DE)**

(74) Vertreter: **Volmer, Georg, Dipl.-Ing. et al
Philips Patentverwaltung GmbH,
Wendenstrasse 35c
D-20097 Hamburg (DE)**

(54) **Kanalauswahleinrichtung in einem Vielfachempfängersystem.**

(57) Die Erfindung betrifft eine Kanalauswahleinrichtung (1) zur Auswahl eines Empfangssignales (e1..en) aus einer vorgebbaren Anzahl von Empfangssignalen (e1..en).

Zur Verbesserung des Funkverkehrs zwischen Mobilstation und einer Zentralstation wird vorgeschlagen, daß die Kanalauswahleinrichtung (1) eine Summiereinrichtung (2) zur mit Gewichtungsfaktoren (G1..Gn) gewichteten Summierung der Empfangssignale (e1..en) und eine Auswerteeinrichtung (3) zur Bestimmung der Gewichtungsfaktoren (G1..Gn) aus einer Auswertung der Empfangssignale (e1..en) aufweist.

FIG.1

EP 0 587 210 A1

Die Erfindung betrifft eine Kanalauswahleinrichtung zur Auswahl eines Empfangssignales aus einer vorgebbaren Anzahl von Empfangssignalen.

Die Erfindung betrifft weiterhin eine Funkfeststation sowie ein Funkübertragungssystem mit einer derartigen Kanalauswahleinrichtung.

Eine Kanalauswahleinrichtung der eingangs genannten Art kann beispielsweise bei einem Funkübertragungssystem verwendet werden, das aus mehreren an verschiedenen Standorten eines Empfangsgebietes angeordneten Empfängern aufgebaut ist. Jeder dieser Empfänger ist zum Empfang eines beispielsweise von einem Flugzeug gesendeten Funksignals vorgesehen. Die Funksignale werden von einer vorgebbaren Anzahl von Empfängern empfangen und können als Empfangssignale an eine Zentralstation übertragen werden. In der Zentralstation erfolgt die Kombinierung der Empfangszweige, d. h. eine Umsetzung der vorgebbaren Anzahl von Empfangssignalen in ein einzelnes Ausgabesignal. Hierzu wird beispielsweise der "beste" Empfangszweig ausgewählt.

Aus US 4246655 ist eine Einrichtung der eingangs genannten Art bekannt. Dabei ist in Fig. 2 der US 4246655 dargestellt, daß mehrere Empfangssignale jeweils einem Empfänger zugeführt werden. Die Ausgangssignale der Empfänger werden jeweils einer Einrichtung zur Ermittlung des Signal-/Störverhältnisses zugeführt. Darüber hinaus werden alle Ausgangssignale der Empfänger an eine Kanalauswahleinrichtung weitergeleitet, die einen Empfangszweig auswählt. Die Kanalauswahleinrichtung wird dabei von einem Detektor angesteuert, der die Ausgangssignale der Einrichtungen zur Ermittlung des Signal-/Störverhältnisses auswertet.

Der Erfindung liegt die Aufgabe zugrunde, eine Einrichtung der eingangs genannten Art anzugeben, bei der der Funkverkehr zwischen Mobilstation und einer Zentralstation verbessert ist.

Diese Aufgabe wird bei einer Einrichtung der eingangs genannten Art dadurch gelöst, daß die Kanalauswahleinrichtung eine Summiereinrichtung zur mit Gewichtungsfaktoren gewichteten Summierung der Empfangssignale und eine Auswerteeinrichtung zur Bestimmung der Gewichtungsfaktoren durch eine Auswertung der Empfangssignale aufweist.

Die Empfangssignale beruhen dabei auf Funksignalen, die von einer beispielsweise in einem Flugzeug angeordneten Mobilstation aus als Funksprüche ausgesendet werden. Diese werden von mehreren innerhalb eines Empfangsgebietes an verschiedenen Standorten angeordneten Empfangsstationen empfangen und als Empfangssignale über mehrere Empfangszweige an eine Zentralstation weitergeleitet. Die Empfangssignale können dabei analog zur Zentralstation übertragen und in bzw. vor der Kanalauswahleinrichtung analog/digital gewandelt werden oder die Empfangssignale werden aufgrund eines digitalen Sendesignals oder einer Analog-/Digital-Wandlung in jeder Empfangsstation zwischen den Empfangsstationen und der Zentralstation bereits digital übertragen, sodaß in jedem Fall digitale Empfangssignale zur Verfügung stehen. Die Empfangssignale werden in einem ersten Signalpfad an die Summiereinrichtung weitergeleitet und in einem zweiten Signalpfad der Auswerteeinrichtung zugeführt. Diese wertet die Empfangssignale aus und ermittelt hieraus die Gewichtungsfaktoren für die gewichtete Summierung der Summiereinrichtung. Diese Ermittlung der Gewichtungsfaktoren erfordert lediglich einen geringen Zeitaufwand im Bereich einiger Millisekunden, sodaß die Auswahl der Empfangssignale lediglich eine geringe Reaktionszeit erfordert, wie dies beispielsweise bei Funksprüchen im Flugfunkverkehr günstig ist. Die Gewichtungsfaktoren können dabei Werte zwischen 0 und 1 betragen, so daß sich beim Umschalten zwischen den jeweiligen Empfangssignalen ein sanftes Umschalten ohne Knakken ergibt. Da lediglich die Empfangssignale selbst ausgewertet werden, kann auf die Verwendung von Signalisierungssignalen, beispielsweise in Form von Signalisierungstönen am Anfang und Ende eines jeweiligen Funkspruches, verzichtet werden.

Eine erste Grundlage für die Auswertung der Empfangssignale wird dadurch geschaffen, daß die Auswerteeinrichtung eine Signalaufbereitungseinrichtung zur Gewinnung jeweils einer Signalenergie zu jedem Empfangssignal aufweist.

Der Einfluß insbesondere von pulsartigen Störungen auf die Kanalauswahl kann dadurch verringert werden, daß der Signalaufbereitungseinrichtung ein Median-Filter nachgeschaltet ist.

Eine erste Klassifikation der Empfangssignale nach "getasteten" Signalabschnitten und solchen, in denen nur das "Kanalrauschen" hörbar ist, ergibt sich dadurch, daß die Auswerteeinrichtung eine die jeweilige Signalenergie der Empfangssignale auswertende Pausenerkennungseinrichtung aufweist, die zur Ermittlung eines ersten Zustandes "Funkspruch" und eines zweiten Zustandes "Pause" aus einer Kurzzeitenergieberechnung und einer Schwellwertentscheidung vorgesehen ist.

Eine fälschliche Klassifizierung des Zustands "Pause", beispielsweise beim Atemholen eines Sprechers, wird dadurch vermieden, daß nach dem Ende eines ermittelten ersten Zustandes "Funkspruch" ein vorgebbarer Zeitabschnitt vorgesehen ist, dem der Zustand "Funkspruch" zugeordnet ist und der dem Ende des ermittelten ersten Zustandes "Funkspruch" angehängt wird.

Die Zuweisung der Gewichtungsfaktoren ergibt sich im wesentlichen dadurch, daß die Auswerteeinrichtung eine Einrichtung zur Bestimmung einer jeweiligen Kanalqualität der Empfangssignale aufweist, die zur Schätzung der Kanalqualität entsprechend dem Signal-Stör-Verhältnis der Empfangssignale beim ermittelten ersten Zustand "Funkspruch" vorgesehen ist.

Eine Weiterverwendung der geschätzten Kanalqualität eines vorherigen Funkspruches wird dadurch sichergestellt, daß zur Bestimmung der Kanalqualität beim ermittelten ersten Zustand "Funkspruch" das Maximum der vorherigen Kanalqualität und das geschätzte Signal-Störverhältnis und beim ermittelten zweiten Zustand "Pause" das Produkt eines vorgebbaren Faktors und der vorherigen Kanalqualität vorgesehen sind.

Ein Abschneiden von Anfangssilben eines Funkspruches wird dadurch vermieden, daß die Auswerteeinrichtung eine Einrichtung zur Ermittlung der Gewichtungsfaktoren aufweist, wobei bei der Vergabe der Gewichtungsfaktoren das Empfangssignal priorisiert wird, bei dem zuerst der Zustand "Funkspruch" erkannt wurde.

Im folgenden wird die Erfindung anhand der in den Figuren dargestellten Ausführungsbeispiele näher erläutert.

Es zeigen:

Fig. 1 ein Funkübertragungssystem mit einer Kanalauswahleinrichtung,

Fig. 2 ein Ausführungsbeispiel einer Auswerteeinrichtung.

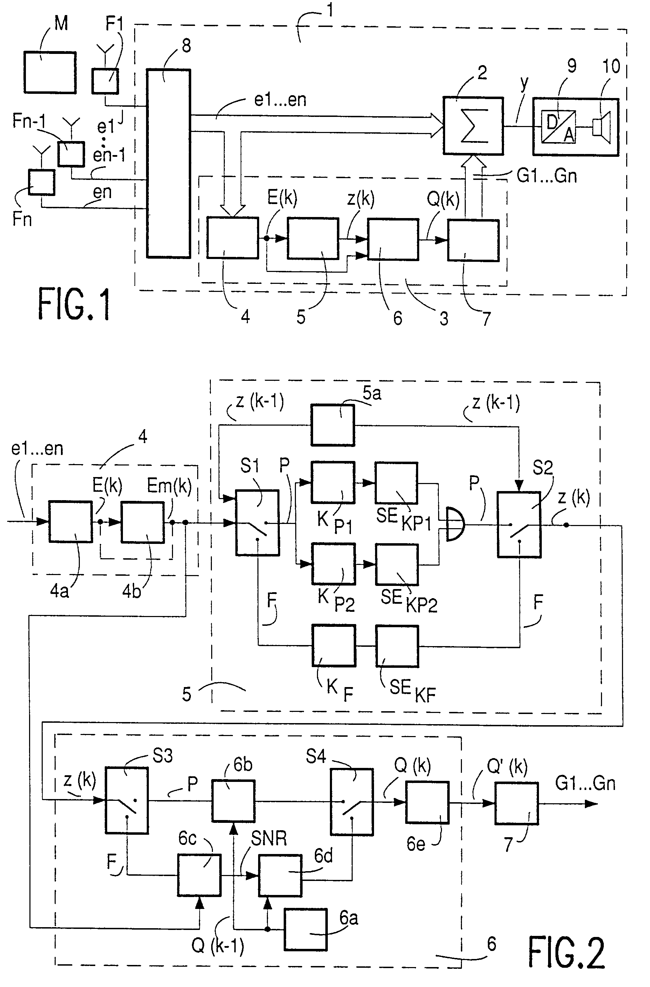

Das in Fig. 1 dargestellte Funkübertragungssystem besteht aus einer Kanalauswahleinrichtung 1, die beispielsweise in einer am Boden befindlichen Funkfeststation (= Bodenzentrale) angeordnet ist. Der Kanalauswahleinrichtung 1 werden Empfangssignale e1..en zugeführt, die von Empfangsstationen F1..Fn empfangen werden. Die Kanalauswahleinrichtung 1 weist weiter eine Eingangseinrichtung 8 auf, in der die Empfangssignale e1..en gegebenenfalls in eine digitale Darstellung, z.B. PCM-Format, überführt werden. Die Empfangssignale e1..en werden einer Summiereinrichtung 2 sowie einer Auswerteeinrichtung 3 zugeführt. Die Auswerteeinrichtung 3 besteht aus einer Signalaufbereitungseinrichtung 4 zur Gewinnung jeweils einer Signalenergie $E(k)$, einer Pausenerkennungseinrichtung 5 zur Ermittlung eines ersten Zustandes "Funkspruch" $z(k) = F$ und eines zweiten Zustandes "Pause" $z(k) = P$, einer Einrichtung 6 zur Bestimmung einer jeweiligen Kanalqualität $Q(k)$ sowie einer Einrichtung 7 zur Ermittlung von Gewichtungsfaktoren G1..Gn. Am Ausgang der Summiereinrichtung 2 liegt eine aus der gewichteten Summe der Empfangssignale e1..en gebildetes "bestes" Empfangssignal y, das über einen Digital-/Analog-Wandler 9 an einen Lautsprecher 10 weitergeleitet wird.

Das in Fig. 1 dargestellte Übertragungssystem dient der Übertragung von Funksignalen zwischen einem am Ort der Mobilstation M befindlichen Piloten eines Flugzeugs und einem am Boden am Ort des Lautsprechers 10 in einer Einsatzzentrale befindlichen Operators. Dabei soll die Kommunikation zwischen dem Piloten und dem Operator möglichst zuverlässig und verzögerungsfrei sein. Zur Sicherstellung dieser Verbindungen sind die Sende-/Empfangsstationen F1..Fn an verschiedenen Standorten über das zu versorgende Sende-/Empfangsgebiet verteilt.

Die Empfangssignale e1..en beruhen auf Funksprüchen, die von einer beispielsweise in einem Flugzeug angeordneten Mobilstation M ausgesendet werden. Aufgabe der Kanalauswahleinrichtung 1 ist es, die Empfangssignale e1..en aller Empfangsstationen F1..Fn auszuwerten und beispielsweise einem "Operator" über einen Lautsprecher 10 den jeweils besten Kanal, d.h. das jeweils beste Empfangssignal e1..en zur Verfügung zu stellen.

Für diese Luft-Boden-Kommunikation werden die empfangenen Funksignale (= Empfangssignale) e1..en aller Empfangsstationen F1..Fn zur Kanalauswahleinrichtung 1 der Einsatzzentrale, beispielsweise in einem Kanalvielfachübertragungsverfahren, übertragen. Die Funkverbindung zwischen der Mobilstation M und den Empfangsstationen F1..Fn ist entsprechend der Fortbewegung des Flugzeugs zeitvariant. Außerdem ist die Funkverbindung zwischen der Mobilstation M und der Empfangsstationen F1..Fn "getastet", d.h., die Funkverbindung ist nur für bestimmte Zeitabschnitte vollständig aufgebaut. In der Zeit, in der die Funkverbindung nicht aufgebaut ist, ist der Übertragungskanal im wesentlichen zeitinvariant und in der Einsatzzentrale kann somit nur Rauschen gemessen werden. Bei dem in Fig. 1 dargestellten Übertragungssystem wird bewußt auf die Ausnutzung von Signalisierungstönen zur Kennzeichnung eines Anfangs bzw. eines Endes eines Funkspruches verzichtet, da diese einen zusätzlichen Aufwand darstellen. Die Empfangssignale e1..en werden von den Empfangsstationen F1..Fn in analoger oder digitaler Form übertragen. Falls die Empfangssignale e1..en von den Empfangsstationen F1..Fn aus analog übertragen werden, erfolgt in der Eingangseinrichtung 8 eine Analog-/Digitalwandlung der Empfangssignale, so daß die Empfangssignale e1..en am Ausgang der Eingangseinrichtung 8 in digitaler Form, z.B. in PCM-Format, zur Verfügung stehen. Die n Empfangssignale e1..en werden durch die Kanalauswahleinrichtung 1 nicht beeinträchtigt, sondern in der Summiereinrichtung 2 in einer "Kanalsynthese" mit den Gewichtungsfaktoren G1..Gn multipliziert und aufsummiert. Diese gewichtete Summe wird dann als ausgewähltes Empfangssignal y als Ausgangssignal nach Digital-/Analogwandlung mittels des D/A-Wandlers über den Lautsprecher 10 hörbar gemacht. Die Hauptaufgabe der Kanalauswahleinrichtung 1 besteht in der Bestimmung der Gewichtungsfaktoren G1..Gn aus den Empfangssignalen e1..en. Hierzu dient die Auswerteeinrichtung 3. Dabei wird in einem ersten Schritt in der Signalaufbereitungseinrichtung 4 die Signalenergie E(k) zu jedem Empfangssignal e1..en bestimmt. Anhand der bestimmten Signalenergien E(k) wird in der Pausenerkennungseinrichtung 5 eine "Funkspruch/Pause"-Klassifikation zur Ermittlung der Zustände z(k) = F und z(k) = P durchgeführt. Falls der erste Zustand "Funkspruch" F vorliegt, wird die Kanalqualität Q(k) in der Einrichtung 6 bestimmmt und anschließend werden hieraus die Gewichtungsfaktoren G1..Gn für die einzelnen Empfangssignale e1..en abgeleitet. Die Gewichtungsfaktoren G1..Gn bewegen sich dabei zwischen 0 und 1 und ermöglichen somit einen gleitenden Übergang vom Zustand "Aus" (= 0) zum Zustand "Ein" (= 1) und umgekehrt, so daß beim Übergang zwischen einzelnen Empfangssignalen keine Schaltgeräusche, z.B. Knacken etc., erfolgt.

Fig. 2 zeigt ein Ausführungsbeispiel einer Auswerteeinrichtung 3, wie sie bei der in Fig. 1 dargestellten Kanalauswahleinrichtung verwendet werden kann. Dabei werden die bereits im Zusammenhang mit Fig. 1 eingeführten Bezugszeichen verwendet. Anhand Fig. 2 werden die einzelnen der Schritte der Auswerteeinrichtung 3 näher erläutert, wobei auf die Angabe eines jeweiligen Kanalindexes zur Kennzeichnung der unterschiedlichen Empfangssignale e1..en verzichtet wird, da die Empfangssignale e1..en aller Kanäle in gleicher Weise und unabhängig von den jeweils anderen Kanälen verarbeitet werden. Erst bei der Ermittlung der Gewichtungsfaktoren G1..Gn wird der Kanalindex wieder eingeführt.

In der Signalaufbereitungseinrichtung 4 wird zunächst mittels der Einrichtung 4a zu jedem Empfangssignal e1..en die Signalenergie E ( = Kurzzeitenergiewerte E(k)) folgendermaßen gewonnen:

Formel1    (1)

Dabei wird angenommen, daß jeder Signalabtastwert x(i) eines bestimmten Kanals genau einmal für die Energiemessung berücksichtigt wird, so daß man nur alle L Abtastwerte einen Energiewert E(k) erhält und die darauf basierende Signalverarbeitung entsprechend nur nach jeweils L Abtastintervallen von neuem durchführen muß. Bei einer praktischen Realisierung wurde eine Mittelungsdauer von 4 ms gewählt, was bei einer Abtastraste von 8 kHz L = 32 Abtastwerten entspricht. Hierdurch ist gewährleistet, daß die Energiemessung auch die Detektion sehr kurzer Pausen innerhalb eines Funkspruchs erlaubt und gleichzeitig aber die Mittelungsdauer nicht zu kurz ist, um auch aussagekräftige Meßwerte zu ermöglichen.

Der Einfluß von pulsartigen Störungen auf die Auswahl der Empfangssignale e1..en kann veringert werden, wenn nach der Bestimmung der Signalenergie E(k) mittels eines Median-Filters 4b eine Median-Filterung durchgeführt wird. Hierzu werden zu einem diskreten Zeitpunkt k die jeweils letzten N Energiewerte der Größe nach sortiert, wobei der Median $E_m(k) = E_{(N-1)/2}$.

Die Pausenerkennungseinrichtung 5 ist zur Ermittlung des ersten Zustandes "Funkspruch" F, d.h. z(k) = F und des zweiten Zustandes "Pause" P, d.h. z(k) = P vorgesehen. Die Zustandsentscheidung der Pausenerkennungseinrichtung 5 beruht dabei im wesentlichen auf einer nichtlinearen Berechnung einer aus der Kurzzeitenergie E(k) bzw. der modifizierten Kurzzeitenergie $E_m(k)$ abgeleiteten Größe und einer nachfolgenden Schwellwertentscheidung. Als Eingangsgrößen für die Pausenerkennungseinrichtung 5 sind die Signalenergie E(k) bzw. $E_m(k)$ sowie der zuletzt angenommene Zustand z(k-1) vorgesehen, der aus einem Speicher 5a an einen ersten Schalter S1 am Eingang und einen zweiten Schalter S2 am Ausgang der Pausenerkennungseinrichtung 5 ausgegeben wird. Wesentlich ist, daß die Entscheidung, ob der zuletzt angenommene Zustand z(k-1) beibehalten wird oder in den jeweils anderen Zustand übergegangen wird, im Zustand "Pause" nach Kriterien $K_{P1}$, $K_{P2}$ und im Zustand "Funkspruch" nach einem Kriterium $K_F$ entschieden wird, d.h. im Zustand "Pause" nach einem anderen Kriterium als im Zustand "Funkspruch". In der Pausenerkennungseinrichtung wird abhängig vom vorausgegangenen Zustand z(k-1) das Kriterium für die aktuell auszuwertende Signalenergie E(k) bzw. $E_m(k)$ ermittelt. Das Kriterium für die Ermittlung des zweiten Zustandes "Pause" kann sich dabei aus zwei einzelnen Kriterien $K_{P1}$, $K_{P2}$ zusammensetzen, deren Entscheidungen als Oder-Verknüpfung betrachtet werden können, wenn der erste Zustand "Funkspruch" mit 1 und der zweite Zustand "Pause" mit 0 gleichgesetzt wird.

Die Kriterien $K_{P1}$, $K_{P2}$ vergleichen jeweils die aktuelle Kurzzeitenergie E(k) mit früheren Energiewerten. Dabei wird beim Kriterium $K_{P1}$ direkt die vorangegangene Kurzzeitenergie E(k-1) zum Vergleich herangezogen, so daß für das Kriterium $K_{P1}$-(k) gilt:

Formel 2    (2)

Demgegenüber wird für das Kriterium $K_{P2}$ der Vergleich mit einem Mittelwert über vergangene Kurzzeitenergiewerte folgendermaßen durchgeführt:

Formel 3    (3)

wobei $\alpha$ typischerweise in der Größenordnung von 0,1 liegt.

Die Schwellwerte für die jeweils nachfolgenden Schwellwertentscheidungen $SE_{KP1}$, $SE_{KP2}$, $SE_{KF}$ sind im Einzelfall festzulegen und an die Kurzzeitenergie des Kanalrauschens anzupassen. In einer Simulation erwiesen sich beispielsweise Schwellwerte in der Größenordnung von $10^{-3}$ als sinnvoll. Der Grundgedanke bei der Wahl der Kriterien für die Pausenerkennungseinrichtung 5 besteht darin, plötzliche Energieänderungen, insbesondere einen Anstieg der Energie, schnell und sicher zu detektieren. Dabei wird davon ausgegangen, daß die Energiewerte $E(k)$ für das Kanalrauschen, d.h. für den zweiten Zustand "Pause" nur relativ wenig schwanken. Als Kriterium zur Ermittlung des ersten Zustandes "Funkspruch" F wird die mittlere Energieschwankung überprüft, wenn man sich im Zustand Funkspruch, d.h. $z(k) = F$ befindet. Die Berechnung erfolgt dabei beispielsweise nach folgender Beziehung:

Formel 4　　　(4)

Für die Wahl der Entscheidungsschwelle $SE_{KF}$ hat es sich als sinnvoll erwiesen, diese gleich der zuletzt ermittelten Kurzzeitenergie $E(k-1)$ zu wählen.

Die Einrichtung 6 der Auswerteeinrichtung 3 ist zur Bestimmung einer jeweiligen Kanalqualität $Q(k)$ der Empfangssignale e1..en. Dabei erfolgt eine Schätzung der Kanalqualität Q entsprechend einem Signal-Stör-Verhältnis SNR (= Signal-to-Noise Ratio) des jeweiligen Empfangssignals e1..en lediglich beim ermittelten ersten Zustand "Funkspruch".

Als vorteilhaft hat es sich erwiesen, die Kanalqualität $Q(k)$ beim ermittelten ersten Zustand "Funkspruch" F aus dem Maximum der vorherigen Kanalqualität $Q(k-1)$ und dem geschätzten Signal-Störverhältnis SNR zu bestimmen. Beim ermittelten zweiten Zustand "Pause" P wird die Kanalqualität $Q(k)$ aus dem Produkt eines vorgebbaren Faktors $\tau$ und der vorherigen Kanalqualität $Q(k-1)$ bestimmt. Somit ergibt sich für die Definition der Kanalqualität $Q(k)$ folgende Beziehung:

Formel 5　　　(5)

wobei der vorgebbare Faktor $\tau$ etwas kleiner als 1,0, z.B. $\tau = 0,999$, und $Q(0) = 0$ gewählt wird. Innerhalb eines Funkspruchs wird demnach jeweils das Maximum der vorhergehenden Kanalqualität $Q(k-1)$ und dem aktuellen geschätzten SNR-Wert verwendet. Die Definition für die Kanalqualität $Q(k)$ nach Gleichung 5 bewirkt, daß der Einfluß eines geschätzten SNR-Wertes um so mehr abnimmt, je weiter er zurückliegt, und daß er gleichzeitig im nächsten Funkspruch um so schneller durch einen aktuellen Wert ersetzt werden kann. Durch die in Gleichung 5 angegebene Definition der Kanalqualität $Q(k)$ wird diese somit für jeden Funkspruch F nicht jedesmal völlig neu berechnet, sondern es wird möglichst viel Information aus dem vorangegangenen Funkspruch in den aktuellen Schätzwert mit eingearbeitet. Hierdurch wird dem Nachteil begegnet, daß der aktuelle SNR-Schätzwert am Anfang eines Funkspruchs noch keine große Aussagekraft hat. Andererseits ist durch die in der Gleichung 5 festgelegte Definition der Kanalqualität $Q(k)$ auch sichergestellt, daß bei einem Ausfall desjenigen Kanals, der beim letzten Funkspruch als der beste eingeschätzt wurde und in der Zwischenzeit aber ausgefallen ist, ein Funkspruch verloren geht. Durch die in Gleichung 5 festgelegt Bestimmung der Kanalqualität $Q(k)$ wird zudem erreicht, daß der erste Teil des Einschwingvorgangs bei der Bestimmung des SNR-Schätzwertes sich nicht auf die Kanalqualität $Q(k)$ auswirkt, daß jedoch wenn der SNR-Schätzwert hinreichend eingeschwungen ist, die Kanalqualität $Q(k)$ dem aktuellen SNR-Schätzwert folgt. In den Pausen entspricht die Kanalqualität $Q(k)$ dem exponentiell abnehmend gewichteten SNR-Schätzwert des vorangegangenen Funkspruchs.

In Fig. 2 ist die Gleichung 5 schematisch als Blockschaltbild dargestellt. Am Ausgang und am Eingang der Einrichtung 6 sind dabei jeweils Schalter S3, S4 vorgesehen, die in Abhängigkeit vom ermittelten Zustand $z(k)$ zwischen der Schalterstellung P für $z(k) = P$ und F für $z(k) = F$ umschaltbar sind. Im Zweig für die Schalterstellung P ist ein Multiplikator 6b vorgesehen, der eine Multiplikation der vorherigen Kanalqualität $Q(k-1)$ mit dem Faktor $\tau$ durchführt. Im Zweig für die Schalterstellung F ist eine Einrichtung 6c vorgesehen, die aus den Energiewerten $E(k)$ entsprechend der weiter unten als Gleichung 6 angegebenen Vorschrift den SNR-Schätzwert bestimmt. Die Einrichtung 6d ermittelt im Anschluß hieran aus dem SNR-Wert und der vorherigen Kanalqualität $Q(k-1)$ die aktuelle Kanalqualität $Q(k)$ entsprechend der Gleichung 5 für $z(k) = F$.

Im folgenden soll angegeben werden, wie sich der SNR-Schätzwert aus der Signalenergie E bestimmen läßt. Hierzu hat sich folgende Definition für den SNR-Schätzwert als vorteilhaft erwiesen:

Formel 6　　　(6)

Dabei bedeutet $k \in F$, daß die Schätzung nur während eines Funkspruchs vorgenommen wird, d.h., wenn der geschätzte Zustand $z(k) = F$ ist. Naturgemäß verlangt das in Gleichung 6 angegebene Kriterium eine gewisse Einschwingdauer, um die gesuchten Extremwerte zu finden. In der Praxis wird man die erste Signalenergie nach der Detektion eines Funkspruchs F sowohl als Maximum auch als Minimum verwenden und davon ausgehend alle weiteren Signalenergiewerte daraufhin prüfen, ob sie ein neues Maximum oder Minimum darstellen. Erst wenn sich Maximum oder Minimum nicht mehr oder nur noch geringfügig ändern, kann man von einem aussagefähigen Meßwert sprechen.

Als vorteilhaft hat es sich erwiesen, anstelle der nach der Gleichung 5 bestimmten Kanalqualität Q eine modifizierte Kanalqualität Q' zu verwenden, die sich nach Multiplikation der Kanalqualität Q(k) nach Gleichung 2 mit einem tiefpaßgefilterten Energiewert ergibt. Aus diesem Grund ist dem Ausgang der Einrichtung 6 ein Multiplizierer 6e vorgeschaltet. Hiermit werden zwei Probleme gleichzeitig gelöst, zum einen wird ein leiser Höreindruck, der sich durch unterschiedliche Eingangspegel der verschiedenen Empfangssignale e1..en ergibt, vermieden sowie einem Abschneiden von Anfangssilben eines Funkspruchs begegnet. Insgesamt ergibt sich eine "first come, first serve"-Strategie, d.h. dem zuerst getasteten Kanal wird die höchste Priorität bei der Vergabe der Gewichtungsfaktoren eingeräumt, solange noch kein anderer mit besserer Qualität getastet ist.

Ausgehend von den Ergebnissen der Signalaufbereitungseinrichtung 4, der Pausenerkennungseinrichtung 5, der Einrichtung 6 zur Bestimmung der jeweiligen Kanalqualität werden in der Einrichtung 7 die Gewichtungsfaktoren G1..Gn ermittelt. Dabei bei wird bei der Ermittlung der Gewichtungsfaktoren für die einzelnen Empfangssignale e1..en folgendes berücksichtigt:
Solange noch kein Funkspruch empfangen wurde, werden alle Kanäle mit gleichem Gewicht G1..Gn $= 1/N$ versehen, wobei N die Anzahl der Empfangskanäle ist. Sobald unterschiedliche Qualitätswerte für verschiedene Kanäle festgestellt werden, wird das Gewicht des besten Kanals gemäß:

Formel 7      (7)

erhöht, wobei $\eta$ eine Konstante ist, die die Geschwindigkeit des exponentiellen Anstiegs bestimmt. $\epsilon_S$ ist ein Startwert nahe 0, der zum Tragen kommt, wenn der vorherige Gewichtungsfaktor sehr nahe bei oder gleich 0 war. Im Gegenzug wird das Gewicht desjenigen Kanals, dessen Qualität Q(k) bzw. Q'(k) am geringsten ist, wie folgt vermindert:

Formel 8      (8)

Hier bestimmt $\eta$ die Zeitkonstante der näherungsweise exponentiellen Abnahme und $\epsilon_S$ sorgt dafür, daß das Gewicht 0 in endlich kurzer Zeit erreicht wird. Durch diese Art der Ermittlung der Gewichtungsfaktoren G1..Gn werden folgende Anforderungen weitestgehend befriedigt:
Falls eine oder mehrere der Funkstrecken getastet sind, sollte mindestens ein Kanal hörbar sein, damit keine Nachricht verloren geht. Außerdem sollte möglichst nur ein Kanal hörbar sein, um Nachhalleffekte zu vermeiden, die durch relative Verzögerungen der verschiedenen Kanäle bedingt sind. Der Übergang zwischen den Kanälen sollte möglichst nicht von Schaltgeräuschen, z.B. Knacken etc., begleitet sein, trotzdem so schnell wie möglich erfolgen. Weiterhin sollten alle Kanäle gleichbehandelt werden, solange für keinen der Kanäle Qualitätsaussagen vorliegen.

Die erste Forderung wird dabei bereits durch die Definition von Q'(k) berücksichtigt, die Beschränkung auf einen hörbaren Kanal wird durch das Aussortieren erreicht, wie es durch die Gewichtsverringerung des jeweils schlechtesten Kanals realisiert wird. Glatte Übergänge werden durch näherungsweise exponentiellen Anstieg und Abfall der Gewichtungsfaktoren G1..Gn erreicht.

Nach der Ermittlung der Gewichtungsfaktoren G1..Gn erfolgt in der Summiereinrichtung 2 lediglich eine gewichtete Summierung der einzelnen Empfangssignale e1..en mit den jeweiligen Gewichtungsfaktoren G1..Gn nach folgender in Gleichung 9 aufgeführten Beziehung:

Formel 9      (9)

**Patentansprüche**

1. Kanalauswahleinrichtung (1) zur Auswahl eines Empfangssignales (e1..en) aus einer vorgebbaren Anzahl von Empfangssignalen (e1..en), <u>dadurch gekennzeichnet,</u>
daß die Kanalauswahleinrichtung (1) eine Summiereinrichtung (2) zur mit Gewichtungsfaktoren (G1..Gn) gewichteten Summierung der Empfangssignale (e1..en) und eine Auswerteeinrichtung (3) zur Bestimmung der Gewichtungsfaktoren (G1..Gn) aus einer Auswertung der Empfangssignale (e1..en) aufweist.

2. Kanalauswahleinrichtung nach Anspruch 1, <u>dadurch gekennzeichnet,</u>
daß die Auswerteeinrichtung (3) eine Signalaufbereitungseinrichtung (4) zur Gewinnung jeweils einer Signalenergie (E) zu jedem Empfangssignal (e1..en) aufweist.

3. Kanalauswahleinrichtung nach Anspruch 2, <u>dadurch gekennzeichnet,</u>
daß der Signalaufbereitungseinrichtung (4) ein Median-Filter (4b) aufweist.

4. Kanalauswahleinrichtung nach einem der Ansprüche 1 bis 3, <u>dadurch gekennzeichnet,</u>
daß die Auswerteeinrichtung (3) eine die jeweilige Signaleinergie (E) der Empfangssignale (e1..en) auswertende Pausenerkennungseinrichtung (5) aufweist, die zur Ermittlung eines ersten Zustandes "Funkspruch" (F) und eines zweiten Zustandes "Pause" (P) aus einer Kurzzeitenergieberechnung und einer Schwellwertentscheidung vorgesehen ist.

5. Kanalauswahleinrichtung nach Anspruch 4,
   dadurch gekennzeichnet,
   daß nach dem Ende eines ermittelten ersten Zustandes "Funkspruch" (F) ein vorgebbarer Zeitabschnitt vorgesehen ist, dem der Zustand "Funkspruch" (F) zugeordnet ist und der dem Ende des ermittelten ersten Zustandes "Funkspruch" (F) angehängt wird.

6. Kanalauswahleinrichtung nach einem der Ansprüche 1 bis 5,
   dadurch gekennzeichnet,
   daß die Auswerteeinrichtung (3) eine Einrichtung (6) zur Bestimmung einer jeweiligen Kanalqualität (Q) der Empfangssignale (e1..en) aufweist, die zur Schätzung der Kanalqualität (Q) entsprechend dem Signal-Stör-Verhältnis der Empfangssignale (e1..en) beim ermittelten ersten Zustand "Funkspruch" (F) vorgesehen ist.

7. Kanalauswahleinrichtung nach Anspruch 6,
   dadurch gekennzeichnet,
   daß zur Bestimmung der Kanalqualität ($Q_k$) beim ermittelten ersten Zustand "Funkspruch" das Maximum der vorherigen Kanalqualität ($Q_{k-1}$) und das geschätzte Signal-Störverhältnis und beim ermittelten zweiten Zustand "Pause" (P) das Produkt eines vorgebbaren Faktors und der vorherigen Kanalqualität ($Q_{k-1}$) vorgesehen sind.

8. Kanalauswahleinrichtung nach einem der Ansprüche 1 bis 7,
   dadurch gekennzeichnet,
   daß die Auswerteeinrichtung (3) eine Einrichtung (7) zur Ermittlung der Gewichtungsfaktoren (G1..Gn) aufweist, wobei bei der Vergabe der Gewichtungsfaktoren (G1..Gn) das Empfangssignal (e1..en) priorisiert wird, bei dem zuerst der Zustand "Funkspruch" (F) erkannt wurde.

9. Funkfeststation für ein Mobilfunksystem mit einer Kanalauswahleinrichtung (1) nach einem der Ansprüche 1 bis 8.

10. Funkübertragungssystem mit einer Kanalauswahleinrichtung (1) nach einem der Ansprüche 1 bis 9.

FIG.1

FIG.2

Europäisches
Patentamt

**EUROPÄISCHER RECHERCHENBERICHT**

Nummer der Anmeldung

EP 93 20 2339

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | US-A-3 986 124 (MITCHELL)<br>* Zusammenfassung *<br>* linke Spalte, Zeile 28 - rechte Spalte, Zeile 15 *<br>* Spalte 2, Zeile 62 - Spalte 3, Zeile 34 *<br>* Abbildung 1 *<br>--- | 1,6,10 | H04B7/04 |
| A | PROCEEDINGS OF 41st IEEE VEHICULAR TECHNOLOGY CONFERENCE<br>19-22 May 1991, St. Louis, Missouri (US)<br>NEW YORK (US)<br>pages 500-504, XP000260229<br>R.D AVELLA ET AL.:<br>"A DIVERSITY RECEIVER FOR THE PAN-EUROPEAN MOBILE DIGITAL SYSTEM"<br>* Seite 500, rechte Spalte, Zeile 42 - Seite 501, linke Spalte, Zeile 34 *<br>* Abbildungen 2,3 *<br>--- | 1,9,10 | |
| D,A | US-A-4 246 655 (PARKER)<br>* Spalte 2, Zeile 60 - Spalte 3, Zeile 16 *<br>* Abbildung 2 *<br>--- | 1,6,9,10 | **RECHERCHIERTE SACHGEBIETE (Int.Cl.5)**<br><br>H04B<br>H04L |
| A | GB-A-2 096 865 (FERRANTI)<br>* Zusammenfassung *<br>* Seite 1, Zeile 109 - Zeile 119 *<br>* Abbildung 1 *<br>----- | 1,6,10 | |

Der vorliegende Recherchenbericht wurde für alle Patentansprüche erstellt

| Recherchenort | Abschlußdatum der Recherche | Prüfer |
|---|---|---|
| DEN HAAG | 25. November 1993 | Lydon, M |